**Europäisches Patentamt**

**European Patent Office**

**Office européen des brevets**

(19)

(11) Numero de publication: **0 034 570**
**A2**

(12) **DEMANDE DE BREVET EUROPEEN**

(21) Numéro de dépôt: **81810049.7**

(22) Date de dépôt: **18.02.81**

(51) Int. Cl.³: **G 07 F 7/02**
**G 07 C 1/30**

(30) Priorité: **19.02.80 CH 1332'80**

(43) Date de publication de la demande:
**26.08.81 Bulletin 81 34**

(84) Etats contractants désignés:
**AT BE DE FR GB IT NL SE**

(71) Demandeur: **Eberlin, Pierre**
**40, avenue de Crozet**
**CH-1210 Geneve(CH)**

(72) Inventeur: **Eberlin, Pierre**
**40, avenue de Crozet**
**CH-1210 Geneve(CH)**

(74) Mandataire: **Dietlin, Henri et al,**
**DIETLIN, MOHNHAUPT & Cie 3, quai du Mont-Blanc**
**CH-1201 Genève(CH)**

(54) **Appareil pour la perception d'une taxe ou d'un montant dû correspondant à une prestation.**

(57) L'appareil de perception d'une taxe ou d'un montant dû correspondant à une prestation comprend des moyens d'enfichage destinés à recevoir un support magnétique à pré-payement amovible (45) comprenant une mémoire crédit (52) contenant une série de signaux unités de crédit et au moins une mémoire d'enregistrement (49 à 51). L'appareil comprend d'autre part un clavier (11) agencé pour introduire des données d'identification de la taxe ou du montant dû, des moyens d'affichage (23 à 27) pour afficher ces données et au moins un circuit de commande (37) pour faire passer entre le support et l'appareil les signaux contenus dans la mémoire crédit (52) et pour introduire dans le mémoire d'enregistrement (49 à 51) les données d'identification de la taxe.

L'appareil est monté sur un véhicule et est utilisé pour percevoir des tax3s de parking ou d'autoroute.

EP 0 034 570 A2

./...

FIG. 2

## Appareil pour la perception d'une taxe
## ou d'un montant dû correspondant
## à une prestation

L'invention a pour objet un appareil pour la perception d'une taxe ou d'un montant dû correspondant à une prestation, notamment pour percevoir une taxe de parking ou d'autoroute.

Il est caractérisé en ce qu'il comprend un support électronique à pré-payement amovible, comprenant une mémoire crédit contenant une série de signaux unités de crédit dont la somme correspond au prix du support et au moins une mémoire d'enregistrement, des moyens pour permettre l'enfichage du dit support, un clavier agencé pour introduire dans l'appareil des données d'identification de la taxe ou du montant dû correspondant à la prestation, des moyens d'affichage pour afficher les données introduites dans l'appareil au moyen du clavier et au moins un circuit agencé pour faire passer entre le support et l'appareil les signaux unités de crédit correspondant à la taxe ou au montant à percevoir, et pour introduire dans la mémoire d'enregistrement du support les informations affichées à l'aide du clavier au fur et à mesure que les signaux crédits sont utilisés.

L'appareil peut comprendre un compteur destiné à emmagasiner tous les signaux unités de crédit au moment où le support est enfiché dans l'appareil, les unités de crédit étant comptabilisées dans un compteur.

Dans un mode d'exécution préféré, l'appareil comprend un oscillateur servant de base de temps couplé avec un circuit de codage agencé pour diviser la fréquence de l'oscillateur, de manière à permettre l'application de différents tarifs en fonction du temps et une mémoire agencée pour recevoir des informations aptes à modifier les tarifs de perception de la taxe proportionnellement aux unités de temps, ces informations étant dirigées vers un circuit de programme de l'appareil. Si plusieurs affichages différents sont nécessaires, le support comprend un registre pas à pas agencé pour permettre l'enregistrement successif des informations affichées dans les différentes mémoires.

Le support peut se présenter sous forme d'une carte électronique à mémoires.

La réalisation de l'appareil fait appel à des procédés et composants électroniques couramment utilisés. Il permet de supprimer l'implantation fâcheuse des parcomètres sur les trottoirs, et leur entretien. Il facilite la perception des taxes en supprimant la collecte de la monnaie sur la voie publique, et permet une gestion financière par ordinateur central et consoles
terminales localisées à volonté pour ce qui concerne la
ventilation et la répartition des taxes perçues dans
divers parcs de stationnement.

L'automobiliste acquiert un crédit de parcage
par le pré-payement de la carte de crédit décrite plus
haut. Cette carte (ou support) est enfichée dans un
boîtier fixé à l'intérieur du véhicule à demeure. Le
crédit est débité au prorata du temps exact passé au
parc de stationnement, à la minute près. Il est possible de tenir compte de plusieurs tarifs/horaires de
stationnement, par exemple: centre ville, périphérie,
parking souterrain , parking d'aéroports, de gare, etc.,
par l'introduction de codes attribués à chaque parking,
déterminant les divers tarifs ou temps limite de stationnement au moyen du clavier actionné par l'automobiliste.

On peut également introduire des temps de
stationnement limités, et sanctionner les dépassements
par un programme interne et automatique de pénalisation
augmentant progressivement le montant débité sur le
crédit porté sur la carte.

Un système antivol, coupant l'allumage du
moteur par un code composé par l'usager sur le clavier
peut interdire le vol de la voiture. Ce système, après
avoir été libéré par l'usager en usant de son code,
impose un parcours minimum avant de pouvoir remettre
en route pour une taxation suivante. On interdit ainsi
la "recharge".

Les codes concernant les tarifs, références et temps limites sont lus par l'usager sur un panneau
qui sera disposé dans chaque parking. D'autres taxations
peuvent être enregistrées par cet appareil, dans l'avenir (péage d'autoroute, prestations diverses, etc., chacune selon sa référence).

La carte de crédit utilise des unités de parcage comme base de taxation, elle peut être acquise,
utilisée et restituée dans une région, un pays, voire
plusieurs pays.

Les prix et tarifs pratiqués dans les divers
pays sont sujets à accords entre les administrations
respectives et la gestion des rétrocessions financières
est prise en charge par les organisations centrales et
se fait par ordinateurs.

Il peut exister des cartes de crédit de divers montants, que l'usager acquiert à son gré.

Les montants payés par les usagers auprès
des dépositaires de cartes sont ensuite centralisés selon
l'organisation de la gestion. Ce point n'est pas pris
en considération dans cet exposé.

Les cartes de crédit comportent un code tenu
secret libérant le fonctionnement de l'appareil. Si
l'on a à faire à une carte contrefaite, le fonctionnement de l'appareil sera interdit et un signal lumineux
indiquera que la carte est fausse.

La carte de crédit peut recevoir des codes
d'instructions modifiables par l'ordinateur central et
destinés à modifier le fonctionnement de l'appareil, par exemple lors d'une modification de la valeur de l'unité de stationnement.

Le contrôle des affichages et de l'installation en service au parking est réalisé par le fait que les différents cadrans lumineux clignottent; ou à choix ils peuvent rester éteints, mais être allumés depuis l'extérieur par le personnel de surveillance muni d'émetteurs radio à fréquence sélectionnée agissant sur un récepteur idoine placé sur le boîtier de l'appareil.

Le dessin représente, à titre d'exemple, un appareil de perception d'une taxe ou d'un montant dû à partir d'un support à pré-payement amovible et enfichable dans l'appareil, le support contenant des informations correspondant à des fonctions ou unités de taxe, selon l'invention.

Dans le dessin:

La fig. 1 représente une vue en perspective d'un appareil de perception d'une taxe de parking à partir d'une carte de crédit à pré-payement enfichable,

la fig. 2 représente le schéma-bloc du circuit électronique de l'appareil de la fig. 1, et

la fig. 3 représente un mode d'exécution de la carte de crédit.

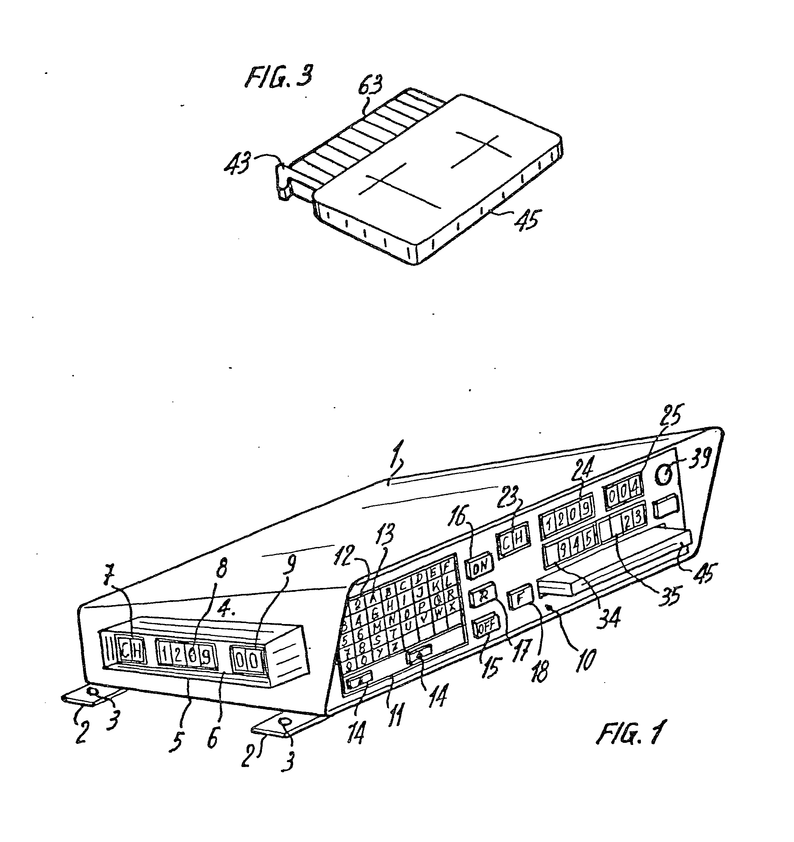

L'appareil représenté dans la fig. 1 comprend un boîtier 1 présentant à sa partie inférieure des pattes de fixation 2 avec des trous 3 permettant de fixer l'appareil sur un emplacement adéquat à l'intérieur d'une voiture, par exemple la partie supérieure du tableau de bord, à l'aide de vis non représentées. Sur un de ses côtés 4, le boîtier 1 présente un cadre 5 délimitant une fenêtre 6 dans laquelle sont placés des groupes de cellules d'affichage 7, 8 et 9 composés respectivement de deux, quatre et trois cellules et permettant d'afficher respectivement le pays, l'endroit (ville, village) et le numéro du parking. Dans la fig. 1, le groupe de cellules 7 indique, à titre d'exemple, la Suisse (CH), le groupe de cellules 8 indique 1209 (Genève 9) et le groupe de cellules 9 le tarif du parking (004).

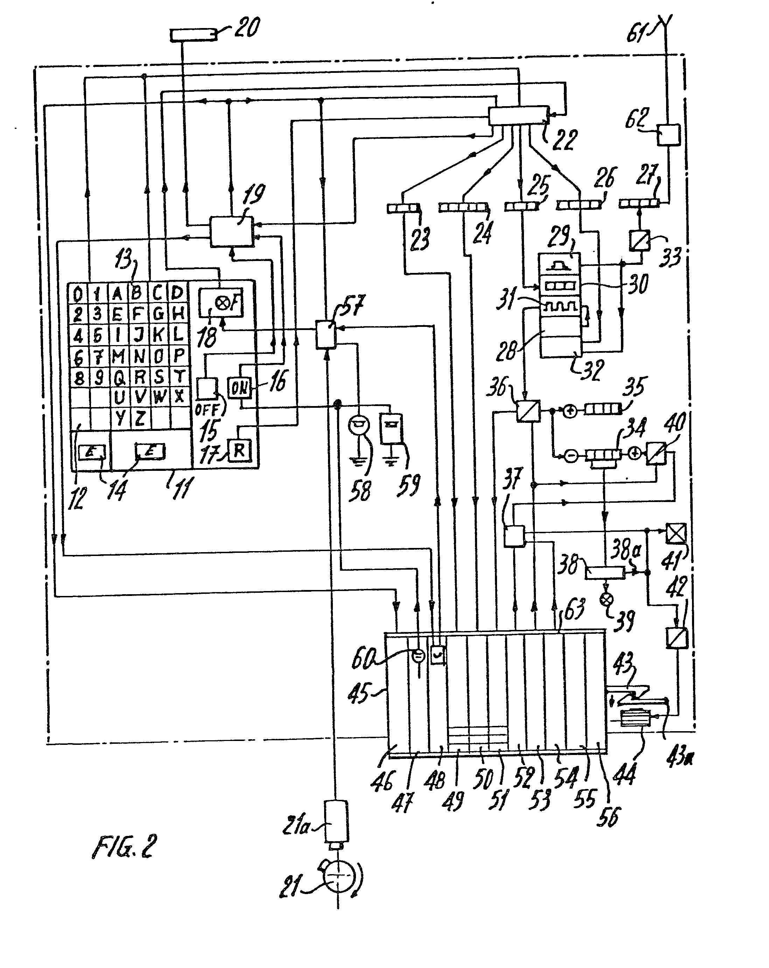

La fenêtre 6 qui vient d'être décrite est placée latéralement sur le boîtier 1 pour permettre à un contractuel de contrôler si l'appareil a été mis en fonctionnement correctement, c'est-à-dire si les données introduites par l'utilisateur correspondent bien à l'endroit et au parking sur lequel la voiture est stationnée. Les groupes de cellules 7, 8 et 9 sont branchées en parallèle avec des groupes de cellules correspondants 23, 24 et 25 placés sur la partie frontale 10 de l'appareil. Le fonctionnement des groupes de cellules 23, 24 et 25, de même que le fonctionnement de tous les éléments d'affichage et de commande placés sur la partie frontale 10 du boîtier 1 de l'appareil sera décrit ci-dessous en regard du circuit de la fig. 2, les mêmes éléments portant dans les fig. 1 et 2 les mêmes numéros de référence.

Comme montré sur les fig. 1 et 2, le boîtier 1 de l'appareil comprend sur sa face frontale 10 un clavier électronique 11 présentant une partie numérique 12 et une partie alphabétique 13, au moyen desquels il sera possible à l'utilisateur de composer les données du stationnement. Sur chaque partie 12 et 13 du clavier
11 sont prévues des touches "E" 14 permettant l'effacement des données typées et introduites par erreur dans
l'appareil. Il comprend encore des touches "OFF" 15 et
"ON" 16 pour l'arrêt et la mise en service, ainsi
qu'une touche "R" 17 agencée pour faire effectuer un pas
à un registre de distribution 22 utilisé entre chaque
référence pour permettre l'inscription et l'affichage
sur un nouveau groupe de cellules. Une touche 18
permet la mise en service du circuit électronique après
que toutes les données nécessaires aient été introduites
et affichées.

Il est prévu un programme électronique antivol
19 mettant à la masse la bobine du Delco 20 de la voiture. En variante, le programme 19 peut commander tout
autre dispositif interdisant la mise en marche et le
fonctionnement du moteur.

En 23, 24, 25 et 26 sont représentés des affichages lumineux électroniques permettant le contrôle
des données introduites dans l'appareil au moyen du
clavier 11. L'affichage 27 indique le temps passé en
stationnement. En 29 est représenté un oscillateur électronique programmé produisant une fréquence constante
utilisée comme base de temps. L'introduction du code
tarif 30 modifie la fréquence des impulsions provenant
de la base de temps 29 et délivrées en 31 sur le circuit
de comptage par l'oscillateur 29. En 32, un programme
électronique est disposé, recevant d'une part l'indication du temps limite imposé introduit dans l'affichage
26, d'autre part enregistrant les temps passés décomptés
par l'oscillateur 29. A la coïncidence de ces deux temps,
un signal électronique est produit par le détecteur de coïncidence 28; il provoque un changement du tarif, mettant en vigueur un tarif plus élevé pour pénaliser les ou des dépassements de temps limite, selon le programme introduit en 28. Un affichage 35 indique les unités de stationnement utilisées au stationnement en cours. Un autre affichage 34 indique à l'usager le crédit d'unités de stationnement encore disponible sur la carte décrite plus loin, un voyant 39 clignote lorsque le crédit est épuisé.

Un programme 37 permet de lire le code d'identification de la carte ainsi que le crédit enregistré dans la carte. La carte amovible 45 représentée sur les fig. 2 et 3 comporte, en 46 un registre pas à pas nécessaire à l'enregistrement dans les mémoires, en 47 un système de mise sous tension permanente de la carte 45 comportant un accumulateur rechargeable 60 destiné au maintien des valeurs enregistrées dans les mémoires, en 48 un coupe-circuit interdisant le fonctionnement du coffret si la carte n'est pas en place. En 49, 50 et 51, la carte 45 comprend des mémoires enregistrant la référence du pays, du numéro de parking et le nombre d'unités de stationnement utilisées au stationnement. En 52, le crédit d'unités de stationnement que l'usager acquiert lorsqu'il achète la carte, est introduit dans ce registre et en 53 une mémoire peut recevoir des instructions modifiant les tarifs de perception des taxes proportionnellement aux unités de compte, en commandant une modification du programme 36 de taxation. En 54 est enregistré un code secret pour détecter les cartes contrefaites et, dans ce cas, le lecteur 37 provoque le fonctionnement d'un clignotant 41 avisant qu'une carte fausse est introduite ainsi que le déverrouillage de la carte par une commande 42. Le lecteur 37 bloque également, dans ce cas, le fonctionnement de l'appareil.
En 55 et 56 sont prévues des fonctions de réserve. Un
crochet 43 permet avec une pièce correspondante 43a
un verrouillage de la carte, qui peut être libérée par
la commande 42 alimentant un électro-aimant 44 attirant
la pièce 43a. La carte 45 comporte des moyens de
connexion électroniques enfichables 63 reliant les réseaux électroniques du boîtier et de la carte. En 21
est représenté un dispositif enregistreur de déplacement minimum imposé, relié à une pièce d'entraînement
non représentée de la voiture, par exemple l'axe d'une
roue ou un compteur kilométrique.

La pièce 21, en tournant avec la pièce d'entraînement non représentée de la voiture, induit un
courant sur un électro-aimant 21a relié à un circuit de
programme 57. Le circuit 57 permet l'interdiction de
fonctionnement de l'appareil de la fig. 2 si le dispositif 21 n'a pas fonctionné durant un déplacement de la
voiture de 300 m au minimum (par exemple), consécutivement à une taxation. Si un stationnement est effectué
sans taxation, le proframme 57 n'intervient pas.

En 58 est représenté un accumulateur rechargeable monté dans le châssis 1 et fonctionne en cas de
panne de la batterie 59 de la voiture.

L'appareil des fig. 1 et 2 se présente sous
la forme d'un coffret fixé à l'intérieur de la voiture
comportant un logement adéquat et un connecteur permettant d'enficher un élément amovible qui constitue la
carte de crédit 45. Cet ensemble est alimenté par la
batterie 59 de la voiture. Un accumulateur de secours
58 est prévu dans le boîtier 1. Un système de maintien 47 est comme mentionné plus haut prévu dans l'élément amovible (carte de crédit). Le boîtier comporte un groupe de commande sous forme d'un clavier alpha-numérique 11 et de diverses touches de commande d'opérations 15 à 18. Un affichage lumineux des données enregistrées 34 et 35 (tarifs-référence parc-temps limite), ainsi que les valeurs du temps écoulé, du crédit utilisé et du crédit restant sont disposés sur les faces de l'appareil de façon à être visibles de l'extérieur de la voiture, une fois les portes de celle-ci verrouillées.

Le contrôle par le personnel de surveillance peut être ainsi assuré. Un dispositif 21 monté sur l'entraînement du compteur kilométrique, enregistre le déplacement minimum de la voiture avant d'autoriser le parcage suivant. Ce dispositif envoie des impulsions dans un programme électronique 57 disposé à l'intérieur du boîtier.

La carte de crédit enfichable 45 est verrouillée en place dès son introduction pour éviter son retrait accidentel ou un vol. Elle est déverrouillée lorsque le solde d'unités de crédit dans l'affichage 34 atteint un minimum préréglé. Ce minimum est lu par le programme 38 et ce programme provoque l'action de la commande 42 par l'intermédiaire de la connexion 38a, ainsi que le clignotement du voyant 39.

Lorsque les données du stationnement sont introduites aux affichages et vérifiées, une touche 15 est pressée sur le coffret qui déclenche le fonctionnement de l'appareil et l'introduction des données relatives au parcage dans des mémoires disposées dans la carte de crédit. On y enregistre également les impulsions correspondant au temps passé au parking. Ce comptage est interrompu par l'usager lorsqu'il veut reprendre sa voiture en pressant sur la touche 15, OFF. Un prochain stationnement sera enregistré dans un "pas" suivant des mémoires de la carte 45.

Lorsque le crédit parcage est épuisé, l'usager échange la carte de crédit 45 contre une nouvelle carte valorisée qu'il enfiche dans le coffret et dont le crédit vient augmenter l'enregistrement à disposition (solde carte enlevée plus crédit nouvelle carte).

La carte de crédit retirée comporte alors dans ses mémoires et ceci pour chaque stationnement effectué l'indication des données suivantes:
1) pays
2) numéro de parking (correspondant à la ville, commune, parking privé)
3) les unités de stationnement utilisées.

L'usager rend obligatoirement une carte de crédit utilisée lorsqu'il veut en acquérir une nouvelle. Des points de distribution sont prévus de façon adéquate pour chaque région, ville, etc. L'administration assurant la gestion financière a encaissé ou facturé préalablement le montant des crédits stationnement. Elle délivre des cartes de crédit à prix fixe. Chaque carte revenant après utilisation, sert à l'organisation de la répartition des revenus financiers au pro-rata de l'utilisation totale de chaque parking, les données pour cette répartition étant fournies par la lecture des mémoires des cartes en retour et comptabilisées et ventilées par un ordinateur central, qui détermine ce que chaque parking doit recevoir. Des centres de lecture des cartes en retour, équipés de lecteurs, de
consoles terminales et autres machines comptables, peuvent être réparties en plusieurs localités d'un pays.
L'organisation de la gestion comptable et financière
n'est pas abordée dans le cadre de la description de
l'invention.

Comme mentionné plus haut, les cellules
d'affichage 23 à 27, de même que les cellules en
parallèle 7 à 9 sont sous tension et affichent constamment l'information enregistrée par l'utilisateur dès
que l'appareil est en fonctionnement, c'est-à-dire
dès que la touche 18 a été pressée. Un contractuel ou
un contrôleur peut alors à tout moment vérifier si les
données de parcage sont exactes. En variante, les
cellules d'affichage 23 à 27, respectivement 7 à 9
peuvent être normalement éteintes et mises sous tension
par un circuit 62 commandé par une antenne 61. Le circuit 62 est agencé pour permettre l'allumage des cellules au moment où une fréquence ou un signal pré-déterminé atteint l'antenne 61. Le contractuel ou le contrôleur
sera alors muni d'un émetteur non représenté émettant
une fréquence ou un signal adéquat qu'il actionnera en
passant à proximité d'une voiture à contrôler. Il pourra
alors procéder à ses vérifications.

Le support amovible se présente sous la forme
d'une plaquette rigide, d'une certaine épaisseur, de
préférence enrobée dans une masse de plastique dur qui
lui confère une robustesse mécanique et une protection
contre l'humidité et la saleté. Ce support comporte
sur un de ses côtés des éléments de connexion électroniques propres à l'enfichage.

L'armature peut être constituée par exemple par une plaque de résine époxy supportant un réseau électronique, un circuit imprimé, des logements adéquats pour recevoir des circuits intégrés, des mémoires électroniques ou magnétiques, des composants électroniques divers, etc., ainsi qu'un système d'alimentation permanent des éléments électroniques en tension avec un accumulateur miniature rechargeable, par exemple.

Cette armature rigide supporte également les moyens d'un verrouillage mécanique pour la retenue du support.

L'appareil qui vient d'être décrit en regard des fig. 1 et 2 fonctionne comme suit:

- <u>mise en place de la carte de crédit 45</u>
La carte de crédit que l'usager vient d'acquérir comporte un nombre d'impulsions enregistrées dans la mémoire (unités de stationnement) 52 proportionnel au prix payé. Par exemple, si une heure de stationnement au tarif normal correspond à 60 impulsions, une carte pourra comporter par exemple 60, 120, 600 impulsions ou plus, au prorata du prix de la carte.

On introduit la carte dans le logement adéquat du coffret 1, on presse légèrement et la carte est verrouillée à l'aide du crochet 43 et la pièce 43a. Un détrompeur est prévu dans la forme de l'enfichage pour interdire un faux positionnement.

Pour mettre en service l'appareil, on presse la touche "ON", le lecteur 37 transfert le crédit d'impulsions dans le compteur 34, par l'intermédiaire du programme 40. La mémoire crédit 52 est alors vide
dans la carte 45 et les mémoires "enregistrements" 49,
50, 51 sont prêtes à recevoir les informations concernant les divers stationnements de l'usager. Ce sont ces
diverses informations qui seront lues par la suite par
un ordinateur central non représenté.

Lorsque l'usager a utilisé presque toutes les
impulsions créditées et lorsqu'il ne reste par exemple
plus qu'une heure de stationnement en réserve, le compteur 34 programmé dans ce but, provoque le déverrouillage de la carte 45 par un sous-programme 42 et l'électro-
aimant 44.

Si une carte contrefaite ne comportant pas
le code secret d'idendification est introduite, le
lecteur 37 provoque le déverrouillage de cette carte
en même temps que le fonctionnement du clignotant 41.

Il faut remarquer que même si l'on arrivait
à déverrouiller la carte crédit 45 pour la voler, il
n'y aurait aucun bénéfice pour le voleur puisque le crédit a été transféré dans le coffret fixé à la voiture.
Le vol de la carte est donc sans objet.

- mise en marche de l'appareil

A l'arrivée au stationnement, l'usager presse la touche
"ON" 16. L'antivol étant hors service, il laisse passer
l'impulsion qui traverse le contrôle de présence en
48 de la carte de crédit 45, puis le programme 57,
si l'on a roulé plus que la distance minimum imposée
depuis le précédent stationnement, et met sous tension
la touche F 18. Un voyant s'allume en F, indiquant que
l'appareil est prêt pour l'utilisation. Le registre 22 étant revenu au début de son programme dès la fin de
l'arrêt précédent, ce programme relie alors le clavier
à l'antivol 19. L'usager compose en premier lieu un code
de trois ou quatre signes (chiffres ou lettres) avec le
clavier alphanumérique. Ce code est enregistré dans
l'antivol et celui-ci coupe l'allumage du moteur pour
en interdire le fonctionnement, simultanément une information arrive sur le registre 22 qui peut être alors
commandé par la touche "R" qui s'allume. Par le moyen
de cette manipulation, on oblige l'automobiliste à
mettre en service l'antivol avant d'afficher le stationnement.

Le code que l'usager introduit dans l'antivol
19 est arbitrairement choisi par lui-même. Il suffit
que ce même code soit utilisé ensuite au moment du
départ. L'usager doit donc s'en souvenir. On peut mettre
en service l'antivol 19 sans mettre en service l'appareil lors d'un stationnement non soumis à une taxe. Il
fonctionne alors comme décrit ci-dessus. Dans le cas
du stationnement avec taxe, l'usager compose ensuite
sur le clavier les indications portées sur un panneau
disposé dans le parking, soit par exemple

CH - 1209 - 04 - 120 où        CH indique le pays (Suisse)

1209 un parking dans Genève 9

04 la référence du tarif appliqué dans ce
parking (par exemple 30 ou 60 unités de
parcage à l'heure)

120 indique le nombre de minutes de stationnement autorisé (si cette dernière référence
est 000 il s'agit d'un temps de stationnement illimité, mais payant, par exemple
pour les aéroports, etc.)

Entre chacune des références, l'usager presse la touche
"R" 17 qui s'éteint et qui fait effectuer un pas de
distribution au registre 22, et les informations introduites apparaissent alors successivement sur les affichages 23, 24, 25, 26. Elles sont vérifiées au fur et
à mesure et les informations erronnées peuvent être
effacées en pressant une des touches "E" 14 et recomposées.

Si toutes les informations introduites sont
correctes, on presse la touche "F" qui provoque le
départ du fonctionnement du parcomètre.

Les opérations de mise en fonction sont alors
terminées.

En résumé:

Mise en service:

| | | |
|---|---|---|
| 1) | presser la touche 16 | "ON" |
| 2) | composer l'antivol, par ex. | 23JA |
| 3) | presser 17 | "R" |
| 4) | composer la référence du pays | CH |
| 5) | presser 17 | "R" |
| 6) | composer la référence parc | 1209 |
| 7) | presser 17 | "R" |
| 8) | composer la référence tarif | 04 |
| 9) | presser 17 | "R" |
| 10 | composer le temps limite | 120 |
| | toutes les données étant | |
| | vérifées, | |
| 11) | presser 18 | "F" |

Ces opérations se font très facilement, comme
sur une calculatrice de poche. Au début de la manipulation, lorsque la touche "ON" a été pressée, elle a commandé simultanément l'allumage permanent des affichages. Ceci afin que l'usager puisse aisément vérifier l'introduction des informations. Lorsque la touche de départ "F" a été pressée, l'allumage permanent est alors remplacé par un allumage intermittent clignotant à une cadence de 20 sec. éteint pour 3 secondes allumé (par exemple), ce clignottement indique au contrôleur du parking que la taxation fonctionne. De plus, il permet d'économiser la consommation électrique.

L'action de la touche "F" provoque:

a) le retour du registre 22 à son premier pas de programme, soit sa liaison avec l'antivol.

b) le clignottement des affichages

c) la mise en fonctionnement de l'oscillateur 29

d) l'envoi des données affichées en 23 et 24 dans les mémoires de la carte de crédit 49 et 50, ainsi que de la référence du tarif 25 en 30 et la référence du temps limite 26 en 28.

L'oscillateur 29 produit alors des impulsions qui sont sélectionnées par la référence/tarif 20 et totalisées dans la mémoire 51 de la carte, par l'intermédiaire du sous-programme 36 qui les transforme en unités de stationnement (par exemple 1 impulsion à la minute). Ce même programme 36 dirige ces unités en 35 où est totalisé le coût du stationnement en unités de stationnement, et en 34 où elles vont diminuer le total du crédit d'unités ayant été transférées de la carte de crédit. On peut ainsi lire le coût du stationnement et le solde du crédit restant, l'oscillateur 29 donne en 27 par le moyen du sous-programme 33 la durée du stationnement en heure et minute.

- <u>arrêt de l'appareil, fin du stationnement</u>

L'usager presse sur la touche "OFF" une première fois.
Ceci permet de recevoir les informations produites par
le clavier alphanumérique passant par le registre 22
qui les dirige sur l'antivol 19. Puis il compose le
code antivol qu'il avait introduit au début du stationnement, ce qui met l'antivol hors service et rétabli le
fonctionnement de l'allumage du moteur. Il presse ensuite une deuxième fois la touche "OFF", et une impulsion part vers le registre 22 et arrête le fonctionnement de l'appareil. Les affichages s'éteignent sauf
celui du compteur 34 contenant le crédit d'unités de
stationnement encore disponible, ce qui peut être obtenu par l'utilisation de mémoires magnétiques par le
compteur 34. L'impulsion venant de "OFF" (2ème impulsion)
provoque dans la carte de crédit le saut d'un pas des
mémoires et la carte est ainsi prête à recevoir les
informations pour un prochain parking.

En résumé:

<u>Arrêt de l'appareil:</u>

1)      presser la touche 45                OFF
2)      composer le code antivol            23JA
3)      presser la touche 45                OFF

On peut ensuite démarrer.

L'interrupteur électronique 57 a reçu la
deuxième impulsion "OFF" et le dispositif 21, lorsque
la voiture roule, délivre des impulsions qui sont enregistrées en 57. Lorsque le nombre des impulsions reçues
correspond à la distance minimum imposée à parcourir,
l'interrupteur 57 permet à nouveau l'alimentation de la
touche F et un nouveau stationnement est autorisé, signalé par le voyant de la touche F qui s'allume.

La construction de l'appareil fait appel à des composants électroniques classiques et bien connus, tels que portes électroniques, inverseurs, circuit ET et OU, registres pas à pas, compteurs à décades, mémoires en circuits intégrés, circuits intégrés du commerce, éventuellement microprocesseurs, ainsi que des affichages courants.

L'homme du métier comprend aisément le fonctionnement de l'appareil qui vient d'être décrit à l'aide du schéma-bloc de la fig. 2. Le détail des différents circuits de l'appareil ne sera par conséquent pas décrit.

La carte de crédit 45 devra pouvoir être achetée, utilisée et remise ou échangée contre une nouvelle carte. Des points de vente selon les besoins, distribuent les cartes de crédit aux usagers et la circulation des cartes se fera comme suit:

1) du point de vente à l'usager

2) enfichage et utilisation

3) retour à un point de vente/échange. L'usager doit obligatoirement rendre une carte utilisée pour pouvoir en acquérir une nouvelle comportant un crédit de stationnement. Lorsqu'une carte est rendue, elle est enfichée dans un lecteur qui contrôle si l'enregistrement des stationnements a bien été fait et si le petit accumulateur 60 fonctionne encore. Les données restent dans la carte. Ce bref contrôle effectué, l'usager peut recevoir une nouvelle carte.

4) Une console terminale reliée à un ordinateur est équipée d'un lecteur de carte ad-hoc où l'opérateur déclenche la lecture de la carte. Les divers stationnements enregistrés sont lus par l'ordinateur et vont servir à produire des notes permettant de répartir le produit centralisé des ventes de cartes à tous les parcs de stationnement concernés.

5) Les mémoires de la carte étant vidées, l'ordinateur envoie alors à nouveau des informations à la console terminale pour recharger la mémoire crédit de la carte ainsi que d'autres instructions telles que code d'identification, instructions pour les tarifs de taxation, etc.

6) La carte peut être remise en vente pour un prochain usager.

7) L'ordinateur enregistre les informations pour un traitement ultérieur, soit comptabilisation, statistique, etc.

L'appareil qui vient d'être décrit offre à l'utilisateur les avantages suivants:

1) L'automobiliste paie le temps réel d'arrêt et de stationnement, à la minute près.

2) Avec le pré-payement des taxes, pas de problème d'argent et de monnaie, spécialement à l'étranger.

3) Il bénéficie d'un antivol efficace.

4) Il peut échanger une carte de crédit partout où le système est en vigueur.

5) Lors du dépassement d'un temps de stationnement, une pénalité peut être introduite et décomptée sur son crédit à disposition. Elle sera plus faible qu'une amende, pour des dépassements courts, ce qui est très appréciable.

6) Il peut aisément constater ses frais de parking.

7) Il peut toujours avoir dans sa voiture une carte validée prête à l'emploi.

8) La mise en oeuvre de son appareil est très simple, il peut la faire depuis sont véhicule, à l'abri des intempéries.

9) Son appareil peut également servir dans tous les
   parkings privés ayant un numéro de référence auprès
   de la gestion financière.

D'autre part, l'appareil permet:
- l'interdiction de la recharge
- le bénéfice d'un antivol personnalisé, avec code
  secret, fonctionne électroniquement,
- l'organisation de parking payant sans personnel ni
  infrastructure lourde; il suffit de panneaux, pour
  pouvoir utiliser le parking temporaire, pour des
  manifestations, etc.
- le contrôle facile et précis des infractions grâce
  aux affichages lisibles depuis l'extérieur de la voiture.
- la suppression des appareils à sous actuels et l'emprise inesthétique sur la voie publique,
- tous les avantages déjà décrits concernant l'organisation de la partie financière, avec comme base de
  calcul les unités de stationnement.

Il est évident que l'utilisation de l'appareil qui vient d'être décrit peut être étendue. Par
exemple, il peut servir à percevoir des taxes, telles
que des taxes d'autoroute ou à payer des factures
d'essence. Il est possible de prévoir et/ou d'ajouter
sur la carte crédit d'autres codes pour les taxes d'autoroute qui seront alors affichées par l'utilisateur
dans l'appareil lorsqu'il passe le poste de contrôle
d'entrée d'une autoroute. D'autre part, il est encore
possible de prévoir un code pour le payement de
l'essence ou de services dans le garage d'un parking.
On demandera dans ce cas à l'utilisateur de l'appareil d'afficher selon un code prévu à cet effet, le service
qu'il a reçu à un poste de contrôle, l'affichage correspondant au payement de ce service.

L'appareil qui vient d'être décrit n'est donc
pas limité à l'utilisation décrite ci-dessus. Il peut,
au contraire, être utilisé pour la perception de toutes
taxes ou montants à partir d'un support à pré-payement
contenant des informations codées. Comme support, il
est possible d'utiliser, en plus de la carte décrite
ci-dessus, tous les supports électroniques connus
susceptibles de recevoir des informations, par exemple
une bande magnétique.

REVENDICATIONS

1. Appareil de perception d'une taxe ou d'un montant dû correspondant à une prestation, caractérisé en ce qu'il comprend un support à pré-payement amovible comprenant une mémoire-crédit contenant une série de signaux unités de crédit dont la somme correspond au prix du support et au moins une mémoire d'enregistrement des unités-crédits débitées en fonction de l'identification des prestations, des moyens pour permettre l'enfichage du dit support, un clavier agencé pour introduire dans l'appareil des données d'identification de la taxe ou du montant dû correspondant à la prestation, des moyens d'affichage pour afficher les données introduites dans l'appareil au moyen des données d'identification de la taxe ou du montant dû correspondant à la prestation, des moyens d'affichage pour afficher les données introduites dans l'appareil au moyen du clavier et au moins un circuit agencé pour faire passer entre le support et l'appareil les signaux unités de crédit correspondant à la taxe ou au montant à percevoir, et pour introduire dans la mémoire d'enregistrement du support les informations d'identification affichées à l'aide du clavier au fur et à mesure que les signaux crédit sont utilisés.

2. Appareil selon la revendication 1, caractérisé en ce qu'il comprend un compteur destiné à enregistrer tous les signaux unités de crédit au moment où le support est enfiché dans l'appareil, les unités de crédit étant comptabilisées dans un compteur et supprimées en même temps dans le support.

3. Appareil selon la revendication 1, caractérisé en ce qu'il comprend un oscillateur servant de base de temps couplé avec un circuit de codage agencé pour diviser la fréquence de l'oscillateur, de manière à permettre l'application de différents tarifs en fonction du temps.

4. Appareil selon la revendication 1, caractérisé en ce que le support comprend une mémoire d'identification agencée pour recevoir des informations code permettant d'éviter des falsifications.

5. Appareil selon les revendications 1 et 3, caractérisé en ce que le support comprend une mémoire agencée pour recevoir des informations aptes à modifier les tarifs de perception de la taxe proportionnellement aux unités de temps, ces informations étant dirigées vers un circuit de programme de l'appareil.

6. Appareil selon la revendication 1, caractérisé en ce que le support comprend un accumulateur rechargeable destiné au maintien des valeurs enregistrées dans les mémoires.

7. Appareil selon la revendication 1, caractérisé en ce que le support comprend un registre pas à pas agencé pour permettre l'enregistrement successif des informations affichées dans les différentes mémoires.

8. Appareil selon la revendication 1, caractérisé en ce qu'il comprend des moyens automatiques de retenue de l'enfichage du support, ces moyens étant ouverts lorsque tous les signaux de crédit contenus dans l'appareil ont été utilisés.

9. Appareil selon la revendication 1, caractérisé en ce que le support comprend des mémoires magnétiques.

10. Appareil selon la revendication 1, caractérisé en ce que le support comprend des mémoires électroniques.

11. Appareil selon la revendication 9, caractérisé en ce que le support est une bande magnétique.

12. Appareil selon la revendication 10, caractérisé en ce que le support est une carte électronique.

13. Appareil selon la revendication 1, caractérisé en ce qu'il est monté sur un véhicule et en ce qu'il présente des moyens permettant de mettre hors fonctionnement ce véhicule.

14. Appareil selon la revendication 13, caractérisé en ce que les moyens permettant de mettre hors fonctionnement le véhicule sont des circuits de mise à la masse d'une pièce du système électrique du véhicule.

15. Appareil selon la revendication 1, caractérisé en ce qu'il est monté sur un véhicule et en ce qu'il comprend des circuits de blocage internes agencés pour empêcher l'introduction et l'affichage des données lorsque le véhicule n'a pas parcouru une distance déterminée.

16. Appareil selon la revendication 15, caractérisé en ce que les circuits de blocage internes sont commandés par un compteur, lui-même alimenté par des impulsions produites par une pièce magnétique rotative reliée aux organes de roulement du véhicule, les circuits étant agencés pour s'ouvrir lorsqu'un nombre d'impulsions déterminé à été enregistré dans le compteur.

17. Utilisation de l'appareil selon la revendication 1 pour la perception de taxe de parking, d'autoroute ou de services effectués sur un véhicule automobile.

FIG. 3

FIG. 1

FIG. 2